Europäisches Patentamt

European Patent Office

Office européen des brevets

(19)

(11) Veröffentlichungsnummer: **0 245 233 B1**

## (12) EUROPÄISCHE PATENTSCHRIFT

(45) Veröffentlichungstag der Patentschrift: **03.06.92**

(51) Int. Cl.5: **H02G 3/06**

(21) Anmeldenummer: **87890081.0**

(22) Anmeldetag: **23.04.87**

(54) Anschluss- bzw. Befestigungselement für Rohre und Schläuche.

(30) Priorität: **09.05.86 AT 1244/86**

(43) Veröffentlichungstag der Anmeldung:
**11.11.87 Patentblatt 87/46**

(45) Bekanntmachung des Hinweises auf die
Patenterteilung:
**03.06.92 Patentblatt 92/23**

(84) Benannte Vertragsstaaten:
**BE CH DE FR GB IT LI NL SE**

(56) Entgegenhaltungen:
**CH-A- 654 958**
**FR-A- 2 385 024**

(73) Patentinhaber: **Dietzel Gesellschaft m.b.H.**
**1. Haidequerstrasse 3**
**A-1111 Wien(AT)**

(72) Erfinder: **Pöcksteiner, Ernst, Dr.**
**Zichygasse 12**
**A-1140 Wien(AT)**
Erfinder: **Gold, Alexander**
**Blütengasse 5/13**
**A-1030 Wien(AT)**

(74) Vertreter: **Collin, Hans, Dipl.-Ing. Dr. et al**
**Patentanwälte Dipl.-Ing. Dr. Hans Collin**
**Dipl.-Ing. Erwin Buresch Dipl.-Ing. Dr. Helmut**
**Wildhack Dipl.-Ing. Armin Häupl Mariahilfer**
**Strasse 50**
**A-1070 Wien(AT)**

**Beschreibung**

Die Erfindung betrifft ein Anschluß- und Befestigungselement für umfangsprofilierte Rohre und Schläuche, z.B. Schutzrohre und Schutzschläuche für Kabel, zum Anschließen bzw. Befestigen derselben an Einrichtungen, z.B. Motoren, Gehäusen, Verteilerkästen od.dgl., mit einem an der Einrichtung befestigbaren Hohlkörper, in welchen das Rohr bzw. der Schlauch einbringbar ist.

Es sind zahlreiche Anschluß- bzw. Befestigungselemente bekannt, mit welchen Rohre und Schläuche an Einrichtungen, wie z.B. Elektromotoren, Verteilerkästen usw., befestigt werden können. Viele dieser Elemente umfassen Anschlußnippel und sind aufwendig ausgeführt, wobei für die Montage jeweils mehrere Arbeitsgänge erforderlich sind.

Aufgabe der Erfindung ist es, diese Nachteile zu vermeiden und ein Anschluß- bzw. Befestigungselement für Rohre und Schläuche zu schaffen, das einen äußerst einfachen Aufbau aufweist und eine formschlüssige Schnellverbindung gestattet.

Dies wird gemäß der Erfindung bei einem Anschluß- bzw. Befestigungselement der eingangs genannten Art dadurch erreicht, daß der Hohlkörper mit einer auf das Rohr bzw. den Schlauch aufbringbaren Kappe versehen ist, die einerseits an dem Hohlkörper lösbar befestigt ist und anderseits in ihrem Inneren einen Ring aufnimmt, der wenigstens eine radial nach innen ragende, mit einem zumindest annähernd radial verlaufenden Abschnitt der Profilierung des Rohres bzw. Schlauches in Eingriff bringbare Lippe aufweist, deren freies, radial nach innen gerichtetes Ende in axialer Richtung auf die Einrichtung hin, an welcher der Hohlkörper befestigbar ist, frei elastisch verformbar ist, und in entgegengesetzter axialer Richtung an eine radial verlaufende Anschlagfläche im Inneren der Kappe anlegbar ist.

Bei Verwendung dieses erfindungsgemäßen Anschluß- bzw. Befestigungselementes können Rohre und Schläuche auf einfache Weise und rasch an der Einrichtung befestigt werden. Es ist lediglich ein einziger Arbeitsvorgang erforderlich, nämlich das Einführen des Rohres bzw. Schlauches in das Anschluß- bzw. Befestigungselement.

Aus der CH-A-654 958 ist es bekannt, in den Seitenwänden von elektrischen Anschlußdosen äußere kreisrunde Vertiefungen mit ein Zentrumsloch aufweisenden Würgemembranen vorzusehen, durch die ein gerippter Schutzschlauch für das Elektrokabel gestoßen werden kann.

Bei Verwendung des erfindungsgemäßen Anschluß- bzw. Befestigungselementes wird automatisch eine zugfeste, wasser-, staub- und gasdichte Positionierung der Rohre bzw. Schläuche erreicht, ohne daß bei der Montage Vorbereitungen (Lösen oder Lockern eines Elements) bzw. Nachbereitung (Betätigen eines Verriegelungselements) erforderlich ist. Die Montage ist mit dem Anbringen des Anschlußelements an dem dafür vorgesehenen Objekt (Verteilerkasten, Gehäuse etc.) und dem Einfügen des entsprechenden Rohres bzw. Schlauches beendet.

In Ausgestaltung der Erfindung ist vorgesehen, daß der Ring zwei oder mehrere, in Umfangsrichtung aufeinanderfolgende Lippen aufweist, die durch Schlitze voneinander getrennt sind. Diese Ausbildung ist für die Praxis bedeutsam, schließt jedoch nicht aus, daß nur eine einzige, sich über den gesamten Umfang oder einen Teil des Umfanges erstreckende Lippe vorhanden ist.

Es ist vorteilhaft, wenn die Dicke der Lippe bzw. Lippen des Ringes in radialer Richtung auf das freie Ende hin zunimmt. Dadurch wird eine ausreichende Elastizität gewährleistet, bei gleichzeitiger Widerstandsfähigkeit gegenüber Scherbeanspruchung im kritischen Bereich.

Es ist zweckmäßig, wenn der die Lippen aufweisende Ring als gesonderter Bauteil ausgebildet ist. Es wäre aber auch möglich, diesen Ring mit dem Hohlkörper zu verbinden bzw. gemeinsam mit diesem herzustellen.

Aus Herstellungsgründen ist es günstig, wenn die Lippen mit dem Ring einstückig ausgebildet sind, wobei der Ring und die Lippen vorzugsweise aus elastisch verformbarem Kunststoff, insbesondere thermoplastischem Kunststoff, bestehen.

Es ist weiters vorteilhaft, wenn die Kappe mittels eines Bajonett- oder Schnappverschlusses mit dem Hohlkörper verbindbar ist, wobei die Kappe den Hohlkörper vorzugsweise außen umfaßt. Die Kappe könnte jedoch auch z.B. mittels Gewinde mit dem Hohlkörper lösbar verbunden werden. Es ist auch möglich, die Kappe, z.B. durch Kleben, unlösbar mit dem Hohlkörper zu verbinden. Dies ist z.B. bei einem Einweganschluß, d.h. einem nur einmal verwendbaren Anschluß, möglich.

Zur Erleichterung der Montage kann der Hohlkörper an seiner Außenfläche mit Anschlagflächen od.dgl. für ein Montagewerkzeug, vorzugsweise einem Sechskant, versehen sein. Es ist jedoch auch ein händisches Verschrauben über die Kappe möglich, da z.B. die Noppen des Bajonettverschlusses auch zum Übertragen von Torsionskräften geeignet sind.

Es ist weiters vorteilhaft, wenn sich die Ausnehmung des Hohlkörpers, in welche das Rohr bzw. der Schlauch einbringbar ist, in Richtung auf das Rohr bzw. den Schlauch hin, insbesondere konisch, stark erweitert, um eine Deformation der Lippen zu ermöglichen.

Weiters kann zwischen dem Hohlkörper und dem Ring eine, vorzugsweise ringförmige, Dichtung angeordnet sein, die insbesondere zwischen den einander zugewandten Stirnseiten des Hohlkörpers und des Ringes eingespannt wird.

Das Abschrägen der Stirnfläche des Hohlkörpers und/oder Ringes erhöhen die Vorspannung des Dichtringes, womit ein verbesserter Dichteffekt erzielt wird.

Es ist weiters zweckmäßig, wenn die, vorzugsweise topfförmig ausgebildete, Kappe koaxial zum Hohlkörper angeordnet ist und an ihrer Außenfläche insbesondere mit Nuten, einer Profilierung od.dgl. zur Erleichterung der Handhabung versehen ist.

Um einen vollständigen Eingriff der Lippen des Ringes mit der Profilierung des Rohres bzw. Schlauches zu gewährleisten, ist es vorteilhaft, wenn die in axialer Richtung gemessene Breite der Lippe bzw. Lippen des Ringes kleiner ist als die Breite des radialen Abschnittes der Profilierung des Rohres bzw. Schlauches. Es ist jedoch auch möglich, daß die Lippe bzw. Lippen des Ringes dicker sind als die Breite der Nuten im Rohr bzw. Schlauch, jedoch eine Abschrägung bzw. Abrundung aufweisen, mit welcher sie mit diesen Nuten zusammenwirken.

Um eine exakte Positionierung des Ringes in der Kappe zu gewährleisten, ist es vorteilhaft, wenn der Ring, insbesondere mit seiner äußeren Mantelfläche, an der inneren Umfangsfläche der Kappe geführt bzw. zentriert ist.

Die Erfindung wird nachstehend an Hand der Zeichnung, in der ein Ausführungsbeispiel des Erfindungsgegenstandes dargestellt ist, näher beschrieben.

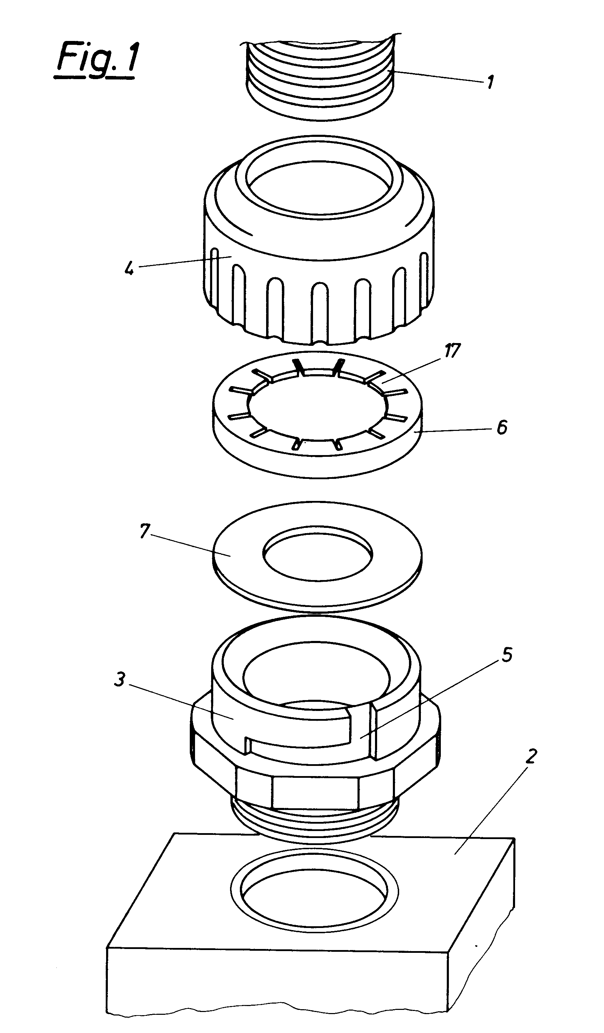

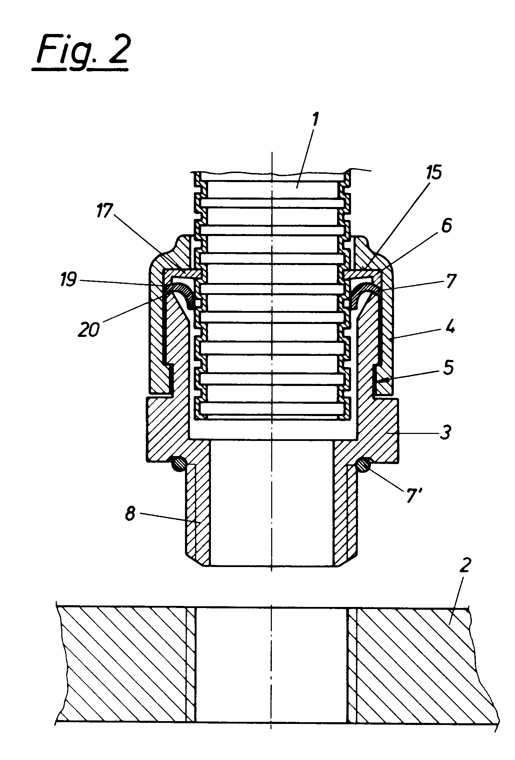

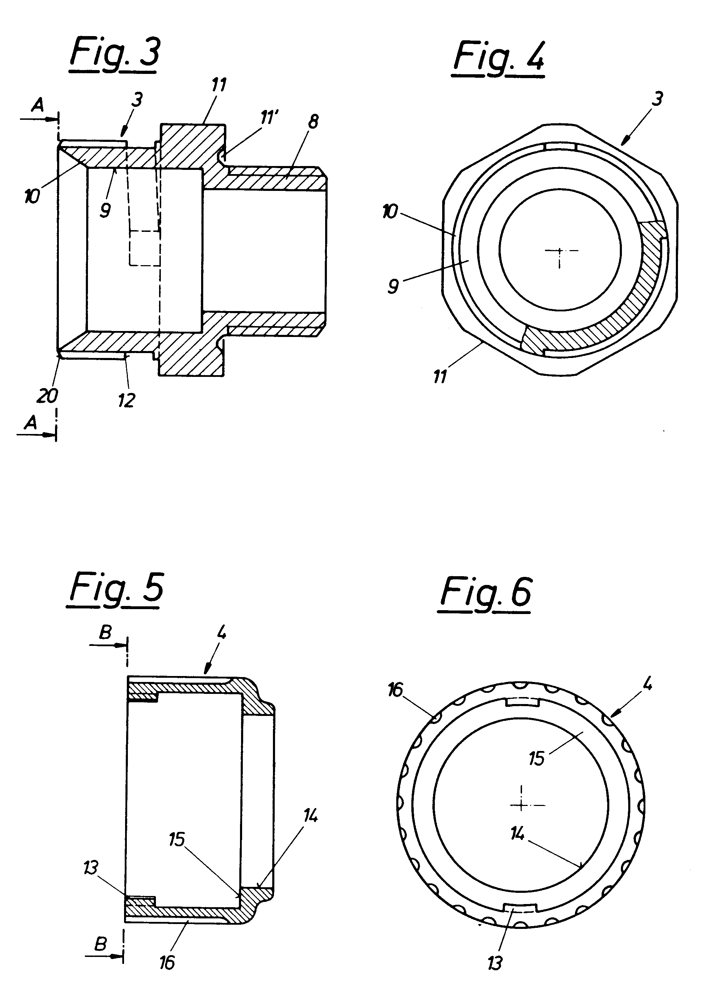

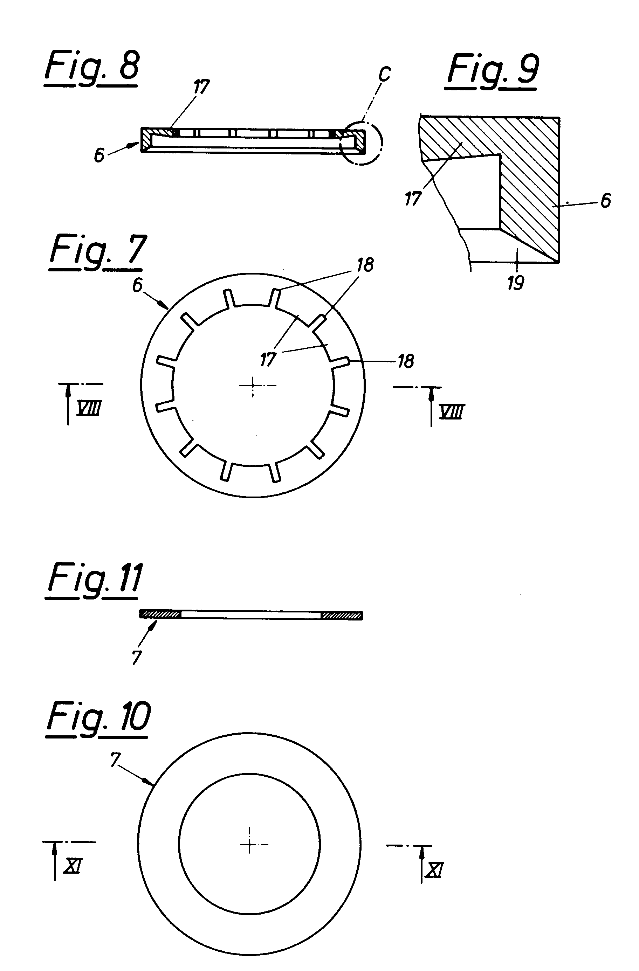

Es zeigen: Fig. 1 eine schaubildliche Darstellung der einzelnen Bauteile des Erfindungsgegenstandes, Fig. 2 einen Schnitt durch den Erfindungsgegenstand, Fig. 3 einen Schnitt durch den Hohlkörper, Fig. 4 eine Ansicht der Fig. 3 in Richtung des Pfeiles A in Fig. 3, Fig. 5 einen Schnitt durch die Kappe, Fig. 6 eine Ansicht der Fig. 5 in Richtung des Pfeiles B in Fig. 5, Fig. 7 eine Ansicht des Ringes, Fig. 8 einen Schnitt entlang Linie VIII-VIII in Fig. 7, Fig. 9 die Einzelheit C aus Fig. 8 im vergrößerten Maßstab, Fig. 10 eine Ansicht der Dichtung, und Fig. 11 einen Schnitt entlang Linie XI-XI in Fig. 10.

Das dargestellte Anschluß- bzw. Befestigungselement zum Anschließen eines umfangsprofilierten Rohres 1 an ein Gehäuse 2 umfaßt gemäß Fig. 1 und 2 einen Hohlkörper 3, in welchen das Rohr 1 einbringbar ist, eine auf den Hohlkörper 3 aufbringbare Kappe 4, die an dem Hohlkörper 3 mittels Bajonettverschluß 5 lösbar befestigbar ist, einen zwischen Hohlkörper 3 und Kappe 4 angeordneten Ring 6 und eine Dichtung 7.

Der Hohlkörper 3 besitzt, wie insbesondere Fig. 3, 4 deutlich zeigen, einen Schraubstutzen 8, mittels welchem er an eine Wand der Einrichtung 2 anschraubbar bzw. einschraubbar ist, und eine koaxiale Ausnehmung 9, in welche das Rohr 1 einführbar ist. Der dem einzuführenden Rohr 1 zugewandte Abschnitt 10 der Ausnehmung 9 ist konisch erweitert ausgebildet. An seiner Außenfläche besitzt der Hohlkörper 3 einen Sechskant 11 zur Erleichterung der Montage und Nuten mit Anschlagflächen 12 für den Bajonettverschluß 5. An der axialen Stirnseite des Sechskantes 11 ist eine umlaufende Nut 11' zur Aufnahme einer weiteren Dichtung 7' (Fig. 2) vorgesehen, die eine Abdichtung zwischen dem Hohlkörper 3 und der Einrichtung 2 gewährleistet.

Die Kappe 4 besitzt, wie insbesondere Fig. 5, 6 deutlich zeigen, an ihrer Innenfläche Vorsprünge 13, die zur Bildung des Bajonettverschlusses 5 mit den Anschlagflächen 12 an der Außenfläche des Hohlkörpers 3 zusammenwirken. Die Ausnehmung, mit welcher die Kappe 4 auf das Rohr 1 aufbringbar ist, ist mit 14 bezeichnet. In ihrem Inneren ist die Kappe 4 außerdem mit einer radialen Anschlagfläche 15 versehen, gegen welche die nachstehend näher beschriebenen Lippen des Ringes 6 anlegbar sind. An ihrer äußeren Mantelfläche ist die Kappe 4 mit axial verlaufenden Nuten 16 zur Erleichterung der Handhabung versehen.

Die Kappe 4 nimmt in ihrem Inneren den Ring 6 auf, der in Fig. 7 bis 9 näher dargestellt ist. Der Ring 6 ist im Querschnitt gesehen annähernd L-förmig ausgebildet und weist eine Mehrzahl von radial nach innen ragenden Lippen 17 auf, die durch Schlitze 18 voneinander getrennt sind. Wie Fig. 2 zeigt, sind die Lippen 17 des Ringes 6 mit radial verlaufenden Abschnitten der Profilierung des Rohres 1 in Eingriff bringbar. Die Lippen 17 sind im Querschnitt gesehen in Richtung auf ihr nach innen gerichtetes Ende verdickt ausgebildet, wobei die Dicke der Lippen 17 kleiner ist als die in axialer Richtung gemessene Breite des Abschnittes der Profilierung des Rohres 1, mit welchem die Lippen 17 in Eingriff bringbar sind.

Die Lippen 17 des Ringes 6 sind in axialer Richtung des Rohres 1 auf die Einrichtung 2 hin frei elastisch verformbar und sind in entgegengesetzter axialer Richtung gegen die Anschlagfläche 15 der Kappe 4 anlegbar.

Das dem Hohlkörper zugewandte Ende des Ringes 6 sowie die Stirnseite des Hohlkörpers 3 sind mit Schrägen 19,20 versehen, die ein Vorspannen des Dichtringes ermöglichen. Mit seiner äußeren Mantelfläche ist der Ring 6 in der Ausnehmung der Kappe 4 geführt bzw. zentriert.

Zwischen dem Ring 6 und dem Hohlkörper 3 ist die Dichtung 7 angeordnet, die in Fig. 10, 11 näher dargestellt ist. Mit der Kappe 4 werden der Ring 6 und die Dichtung 7 in axialer Richtung gegen den Hohlkörper 3 gedrückt.

Die Wirkungsweise des dargestellten Anschluß- bzw. Befestigungselementes ist folgende:

Beim Einschieben des Rohres 1 in das gemäß Fig. 2 zusammengebaute Anschlußelement werden die Lippen 17 des Ringes 6, der aus einem mehr oder minder elastischen Material, vorzugsweise Kunststoff, hergestellt ist, aus ihrer Ruhestellung nur in Richtung des einzuschiebenden Rohres 1 verformt werden können und in das Umfangsprofil des Rohres 1 einrasten. Bei entgegengesetzter Zugrichtung verkrallen sich die Lippen 17 des Ringes 6 im Rohr 1, so daß dieses Rohr 1 zwar noch den Weg bis zur Ruhestellung der Lippen 17 vollziehen kann, dann jedoch erfolgt an der axialen Anschlagfläche 15 der Kappe 4 die endgültige Positionierung und das Rohr 1 kann nur noch durch Abscheren der Lippen 17 aus seiner Position gebracht werden. Es ist jedoch die zum Abscheren der Lippen 17 benötigte Kraft wesentlich höher als diejenige, die zum Abreißen des Rohres 1 notwendig ist.

Der Durchmesser der Kappe 4 soll jedoch nicht wesentlich größer sein als der des Rohres 1, da sonst eine Deformation der Lippen 17 nicht auszuschließen ist.

Ein Lösen der Verbindung ist durch einfaches Abnehmen bzw. Abschrauben der Kappe 4 und durch händisches Abziehen des Ringes 6 und der Dichtung 7 jederzeit rasch möglich, denn durch das Abnehmen der Kappe 4 wird die Anschlagfläche 15 entfernt, und die Lippen 17 des Ringes 6 können nunmehr auch in entgegengesetzter Richtung über die Profilierung des Rohres 1 hinweggleiten.

Das dargestellte Anschluß- und Befestigungselement, bestehend aus dem Hohlkörper 3, der Kappe 4, dem Ring 6, und gegebenenfalls der Dichtung 7, gelangt in der Regel bereits fertig montiert zum Anwender, so daß nur mehr das Rohr bzw. der Schlauch eingeschoben werden braucht und der Anschluß somit fertig ist.

Im Rahmen der Erfindung sind verschiedene Varianten möglich.

Beispielsweise kann auch der Hohlkörper, der als Grundkörper konzipiert ist, mit einem Bajonettverschluß oder einem ähnlichen Schnappverschluß mit der Einrichtung, d.h. dem Motor, Gehäuse, Verteilerkasten usw., verbunden werden. In diesem Falle wird der Stutzen 8 durch eine entsprechende Verriegelung ersetzt.

Die Öffnung 14 in der Kappe 4, die zum Einführen des Rohres bzw. Schlauches 1 dient, kann zylindrisch oder konisch ausgebildet werden, um ein Verkanten des Rohres bzw. Schlauches beim Einführen zu verhindern.

Unter Kappe wird hiebei jeder Körper verstanden, der den Hohlkörper an seiner axialer Stirnseite und/oder an seiner Mantelfläche wenigstens teilweise übergreift oder abdeckt. Wesentlich ist, daß dieser Körper hohl ausgebildet ist, um den Ring 6 aufzunehmen.

Die Erweiterung des Innendurchmessers des Hohlkörpers 3 im oberen Bereich, welche eine Deformation der Lippen 17 begünstigt, kann konisch oder zylindrisch ausgeführt sein.

Eine Verformung des Ringes 6 kann durch eine Zentrierung in der Kappe 4 sowie durch einen Bund am Außendurchmesser ausgeschlossen werden.

## Patentansprüche

1. Anschluß- und Befestigungselement für umfangsprofilierte Rohre (1) und Schläuche, z.B. Schutzrohre und Schutzschläuche für Kabel, zum Anschließen bzw. Befestigen derselben an Einrichtungen (2), z.B. Motoren, Gehäusen, Verteilerkästen od.dgl., mit einem an der Einrichtung (2) befestigbaren Hohlkörper (3), in welchen das Rohr (1) bzw. der Schlauch einbringbar ist, dadurch gekennzeichnet, daß der Hohlkörper (3) mit einer auf das Rohr (1) bzw. den Schlauch aufbringbaren Kappe (4) versehen ist, die einerseits an dem Hohlkörper (3) lösbar befestigbar ist und anderseits in ihrem Inneren einen Ring (6) aufnimmt, der wenigstens eine radial nach innen ragende, mit einem zumindest annähernd radial verlaufenden Abschnitt der Profilierung des Rohres (1) bzw. Schlauches in Eingriff bringbare Lippe (17) aufweist, deren freies, radial nach innen gerichtetes Ende in axialer Richtung auf die Einrichtung (2) hin, an welcher der Hohlkörper (3) befestigbar ist, frei elastisch verformbar ist und in entgegengesetzter axialer Richtung an eine radial verlaufende Anschlagfläche (15) im Inneren der Kappe (4) anlegbar ist.

2. Anschluß- und Befestigungselement nach Anspruch 1, dadurch gekennzeichnet, daß der Ring (6) zwei oder mehrere, in Umfangsrichtung aufeinanderfolgende Lippen (17) aufweist, die durch Schlitze (18) voneinander getrennt sind (Fig. 7).

3. Anschluß- und Befestigungselement nach Anspruch 1 oder 2, dadurch gekennzeichnet, daß die Dicke der Lippe bzw. Lippen (17) des Ringes (6) in radialer Richtung auf das freie Ende hin zunimmt (Fig. 8, 9).

4. Anschluß- und Befestigungselement nach einem der Ansprüche 1 bis 3, dadurch gekennzeichnet, daß der die Lippen (17) aufweisende Ring (6) als gesondertes Bauteil ausgebildet ist.

5. Anschluß- und Befestigungselement nach einem der Ansprüche 1 bis 4, dadurch gekennzeichnet, daß die Lippen (17) mit dem Ring (6) einstückig ausgebildet sind, wobei der Ring (6) und die Lippen (17) vorzugsweise aus elastisch verformbarem Kunststoff, insbesondere thermoplastischem Kunststoff, bestehen.

6. Anschluß- und Befestigungselement nach einem der Ansprüche 1 bis 5, dadurch gekennzeichnet, daß die Kappe (4) mittels eines Bajonett- oder Schnappverschlusses (5) mit dem Hohlkörper (3) verbindbar ist, wobei die Kappe (4) den Hohlkörper (3) vorzugsweise außen umfaßt.

7. Anschluß- und Befestigungselement nach einem der Ansprüche 1 bis 6, dadurch gekennzeichnet, daß der Hohlkörper (3) an seiner Außenfläche mit Anschlagflächen od.dgl. für ein Montagewerkzeug, vorzugsweise einem Sechskant (11) versehen ist (Fig. 3, 4).

8. Anschluß- und Befestigungselement nach einem der Ansprüche 1 bis 7, dadurch gekennzeichnet, daß sich die Ausnehmung (9) des Hohlkörpers (3), in welche das Rohr bzw. der Schlauch (1) einbringbar ist, in Richtung auf das Rohr bzw. den Schlauch (1) hin, insbesondere konisch, erweitert.

9. Anschluß- und Befestigungselement nach einem der Ansprüche 1 bis 6, dadurch gekennzeichnet, daß zwischen dem Hohlkörper (3) und dem Ring (6) eine, vorzugsweise ringförmige, Dichtung (7) angeordnet ist, die insbesondere zwischen den einander zugewandten Stirnseiten des Hohlkörpers (3) und des Ringes (6) eingespannt wird.

10. Anschluß- und Befestigungselement nach einem der Ansprüche 1 bis 9, dadurch gekennzeichnet, daß die den Dichtring einklemmenden Stirnseiten von Hohlkörper (3) und Ring (6) abgeschrägt sind.

11. Anschluß- und Befestigungselement nach einem der Ansprüche 1 bis 10, dadurch gekennzeichnet, daß die, vorzugsweise topfförmig ausgebildete, Kappe (4) koaxial zum Hohlkörper (3) angeordnet ist und an ihrer Außenfläche insbesondere mit Nuten (16), einer Profilierung od.dgl., zur Erleichterung der Handhabung versehen ist.

12. Anschluß- und Befestigungselement nach einem der Ansprüche 1 bis 11, dadurch gekennzeichnet, daß die in axialer Richtung gemessene Breite der Lippe bzw. Lippen (17) des Ringes (6) kleiner ist als die Breite des radialen Abschnittes der Profilierung des Rohres (1) bzw. Schlauches.

13. Anschluß- und Befestigungselement nach einem der Ansprüche 1 bis 12, dadurch gekennzeichnet, daß der Ring (6), insbesondere mit seiner äußeren Mantelfläche, an der inneren Umfangsfläche der Kappe (4) geführt bzw. zentriert ist.

**Claims**

1. Connection and attachment member for peripherally profiled tubes (1) and hoses, e.g. protecting tubes and protecting hoses for cables, for connecting or attaching them to means (2), e.g. motors, housings, distribution boxes or the like, having a hollow body (3) attachable to the means (2), into which the tube (1) or hose may be introduced, characterized in that the hollow body (3) is provided with a cap (4) that may be out onto the tube (1) or hose and is on the one hand detachably attachable to the hollow body (3) and on the other hand accomodates a ring (6) at its inside, the ring having at least one lip (17) protruding radially towards the inside and being engagable with a section of the profile of the tube (1) or hose of at least approximately radial course, the free, radially inwardly directed end of which lip is freely elastically deformable in axial direction towards the means (2) to which the hollow body (3) may be attached and is abuttable on a stopping face (15) of radial course inside the cap (4) in opposite axial direction.

2. Connection and attachment member according to claim 1, characterized in that the ring (5) has two or more lips (17) succeeding each other in peripheral direction, separated from each other by slots (18) (fig. 7).

3. Connection and attachment member according to claim 1 or 2, characterized in that the thickness of the lip or lips (17) of the ring (5) increases in radial direction towards the free end thereof (fig. 8,9).

4. Connection and attachment member according to anyone of the claims 1 to 3, characterized in that the ring (6) having lips (17) is formed as a separate element.

5. Connection and attachment member according to anyone of the claims 1 to 4, characterized in that the lips (17) are formed in one piece with the ring (6), the ring (6) and lips (17) preferably consisting of elastically deformable plastics, especially thermoplastic plastics.

6. Connection and attachment member according to anyone of the claims 1 to 5, characterized in that the cap (4) is connectable to the hollow body (3) by means of a bayonet joint or a snap closure (5), the cap (4) embracing the hollow body (3) preferably at the outside.

7. Connection and attachment member according to anyone of the claims 1 to 6, characterized in that the hollow body (3) is provided with stopping faces or the like for a mounting tool, preferably a hexagon (11), on its outer surface (figs. 3, 4).

8. Connection and attachment member according to anyone of the claims 1 to 7, characterized in that the recess (9) of the hollow body (3), into which the tube or hose (1) may be introduced, widens, in particular conically, in direction towards the tube or hose (1).

9. Connection and attachment member according to anyone of the claims 1 to 8, characterized in that a preferably annular seal (7) is disposed between the hollow body (3) and the ring (6), which is in particular clamped between the faces of the hollow body (3) and the ring (6), which are facing each other.

10. Connection and attachment member according to anyone of the claims 1 to 9, characterized in that the faces of the hollow body (3) and ring (6) clamping the sealing ring are bevelled.

11. Connection and attachment member according to anyone of the claims 1 to 10, characterized in that the preferably pot-shaped cap (4) is disposed coaxially to the hollow body (3) and at its outer surface is provided in particular with grooves (16), a profile or the like, in order to facilitate handling.

12. Connection and attachment member according to anyone of the claims 1 to 11, characterized in that the width of the lip or lips (17) of the ring (6), measured in axial direction, is smaller than the width of the radial section of the profile of the tube (1) or hose.

13. Connection and attachment member according to anyone of the claims 1 to 12, characterized in that the ring (6), especially with its outer enveloping surface, is guided or centered at the inner peripheral surface of the cap (4).

**Revendications**

1. Pièce de raccordement et d'attache pour tuyaux (1) et gaines périphériquement profilés, par exemple tubes protecteurs et gaines de protection pour cables, pour les raccorder ou attacher à des moyens (2), bar exemple à des moteurs, caisses, boites de distribution etc., avec un corps creux (3) attachable aux Moyens (2), dans lequel le tuyau (1) ou la gaine peut etre introduit, caractérisée en ce que le corps creux (3) est muni d'un couronnement (4) applicable au tuyau (1) ou à la gaine, ce couronnement d'une part étant attachable au corps creux (3) de façon détachable et d'autre part reçevant un anneau (6) dans son intérieur, cet anneau présentant d'au moins une lèvre (17) projettant radialement vers l'intérieur et apte à etre engagée dans une section ayant une allure au moins approximativement radiale du profilage du tuyau (1) ou de la gaine, l'extrémité libre de cette lèvre projettant radialement vers l'intérieur étant librement déformable élastiquement en direction axiale vers les moyens (2) auxquels le corps creux (3) est attaché et étant applicable en direction axiale opposée contre une surface d'arret (15) à l'intérieur du couronnement (4), ayant une allure radiale.

2. Pièce de raccordement et d'attache selon la revendication 1, characterisée en ce que l'anneau (5) présente deux ou plusieurs lèvres (17) successives en direction périphérique, separées par des rainures (18) (figure 7).

3. Pièce de raccordement et d'attache selon revendication 1 ou 2, caractérisée en ce que l'épaisseur de la ou des lèvre(s) (17) de l'anneau (6) s'accroit en direction radiale vers l'éxtremité libre (figures 8,9).

4. Pièce de raccordement et d'attache selon l'une des revendications 1 à 3, caractérisée en ce que l'anneau (6) présentant les lèvres (17) est formé comme élément séparé.

5. Pièce de raccordement et d'attache selon l'une des revendications 1 à 4, charctérisée en ce que les lèvres (17) sont formées en une pièce avec l'anneau (6), l'anneau (6) et les lèvres (17) consistant préférablement en une matière plastique élastiquement déformable, en particulier en thermoplastique.

6. Pièce de raccordement et d'attache selon l'une des revendications 1 à 5, characterisée en ce que le couronnement (4) est reliable au corps creux (3) au moyen d'un joint à baionnette ou une serrure à déclic(5), le couronnement (4) tenant embrassé le corps creux (3) de préférence à l'extérieur.

7. Pièce de raccordement et d'attache selon l'une des revendications 1 à 6, characterisée en ce que le corps creux (3) est muni des surfaces d'arret etc. pour un outil de montage, de préférence un hexagone (11), à sa face extérieure (figures 3, 4).

8. Pièce de raccordement et d'attache selon l'une des revendications 1 à 7, characterisée en ce que le creux (9) du corps creux (3), dans lequel le tuyau ou la gaine (1) peut etre introduit, s'élargit en direction vers le tuyau ou la gaine (1), notamment de façon conique.

9. Pièce de raccordement et d'attache selon l'une des revendications 1 à 8, characterisée en ce que une garniture (7), de préférence annulaire, est disposée entre le corps creux (3) et l'anneau (6), cette garniture étant notamment serrée entre les faces du corps creux (3) et de l'anneau (6), tournées l'une vers l'autre.

10. Pièce de raccordement et d'attache selon l'une des revendications 1 á 9, characterisée en ce que les faces du corps creux (3) et de l'anneau (5), qui serrent l'anneau de garniture, sont chanfreinées.

11. Pièce de raccordement et d'attache selon l'une des revendications 1 à 10, characterisée en ce que le couronnement (4), qui a de préférence la forme d'un pot, est disposé de façon coaxiale par rapport au corps creux (3) et est notamment muni à sa face extérieure des rainures (16), d'un profilage etc., pour faciliter son maniement.

12. Pièce de raccordement et d'attache selon l'une des revendications 1 à 11, characterisée en ce que la largeur de la ou des lèvre(s) (17) de l'anneau (6), mesurée en direction axiale, est inférieure à la largeur de la section radiale du profilage du tuyau (1) ou de la gaine.

13. Pièce de raccordement et d'attache selon l'une des revendications 1 à 12, characterisée en ce que l'anneau (6), notamment avec sa surface enveloppante, est guidé ou centré à la surface périphérique intérieure du couronnement (4).

_Fig.1_

Fig. 2

9

EP 0 245 233 B1

# Fig. 3

# Fig. 4

# Fig. 5

# Fig. 6

10

Fig. 8

Fig. 9

Fig. 7

Fig. 11

Fig. 10